# DEMANDE DE BREVET EUROPEEN

(11) **EP 0 795 950 A1**
(43) Date de publication de la demande: **17.09.1997**
(21) Numéro de dépôt: 97400529.0
(22) Date de dépôt: 10.03.1997
(51) Int. Cl.: H02K 5/128

(54) **Actionneur magnétique pourvu d'une paroi de séparation**

(30) Priorité: 13.03.1996 FR 9603147
(71) Demandeur: AEROSPATIALE Société Nationale Industrielle, 75781 Paris Cédex 16 (FR)
(72) Inventeur: Marroux, Olivier, 75016 Paris (FR); Jamain, Patrice, 78580 Maule (FR); Lambert, Charles, 75018 Paris (FR)
(74) Mandataire: Rinuy, Santarelli

(57) **Abrégé**

Un actionneur magnétique, tel qu'un palier magnétique, comprend une partie fixe (2) et une partie mobile (1). Ces parties sont ferromagnétiques et forment entre elles un entrefer (E) s'étendant parallèlement à une première direction prédéterminée. L'actionneur magnétique comprend en outre une paroi amagnétique (3) interposée dans l'entrefer ; La paroi est par exemple celle d'une enceinte de confinement. L'actionneur magnétique est caractérisé en ce que l'une (2) des parties fixe et mobile comprend des doigts (25) pénétrant dans la paroi amagnétique, dirigés vers l'autre (1) des parties fixe et mobile.

## Description

La présente invention concerne d'une manière générale un actionneur magnétique comprenant un circuit magnétique formé d'une partie fixe et d'une partie mobile sans contact, formant entre elles un entrefer dans lequel est insérée une paroi de séparation.

L'actionneur magnétique est plus particulièrement un palier magnétique et la paroi est par exemple celle d'une enceinte de confinement.

Des applications spécifiques de palier nécessitent l'utilisation d'une enceinte de confinement autour de l'un de deux corps en mouvement relatif. Ces applications impliquent par exemple une haute pression, une haute température ou un vide primaire ou poussé. D'autres exemples sont des ambiances corrosives, toxiques ou radioactives. Il n'est généralement pas approprié de placer la totalité du palier dans l'enceinte de confinement. Ce type d'applications exige donc une parfaite étanchéité entre les deux parties de l'actionneur et rend ainsi, entre le corps mobile et l'autre corps, l'utilisation de joints statiques, a fortiori tournants, délicate.

Un actionneur magnétique est alors une solution intéressante puisqu'il permet une liaison sans contact entre les différents corps.

De manière connue, par exemple par le document US-A-4.918.345, un palier magnétique est utilisé pour le centrage magnétiquement actif, selon au moins un axe de centrage, d'un corps mobile par rapport à un autre corps. Les deux corps comportent des portions ferromagnétiques, sans contact, et le corps mobile est dit en suspension. Un centrage magnétiquement actif implique l'utilisation d'un bobinage dans lequel circule un courant réglable propre à générer un flux magnétique réglable. Généralement, un tel palier comprend en outre des aimants permanents qui peuvent, dans certaines configurations, assurer un centrage passif selon un ou plusieurs autres axes. Les paliers magnétiques sont fréquemment utilisés dans le cas de corps tournants, mais sont également utilisables dans le cas de mouvements linéaires.

Cependant, les parois de l'enceinte de confinement passent dans l'entrefer entre la partie fixe et la partie mobile ; or ces parois, éventuellement épaisses, doivent en principe être amagnétiques pour ne pas créer de court-circuit magnétique et constituent de ce fait un entrefer parasite au sein de l'entrefer de l'actionneur magnétique. Cet entrefer parasite est d'autant plus gênant qu'il faut tenir compte de différentes dilatations des pièces mécaniques dues à la température et/ou à la pression, et donc prévoir un entrefer supplémentaire. Il faut enfin conserver un débattement suffisant entre les parties fixe et mobile pour garantir l'absence de contact.

Cette augmentation de l'entrefer par rapport à un cas sans paroi conduit à une diminution des performances de l'actionneur magnétique ou à une augmentation des tailles des pièces, des bobinages, des courants d'excitation, etc., si l'on veut conserver les mêmes performances. Cette augmentation de «dimensionnement» de l'actionneur magnétique est pénalisante en coût de revient et en place utilisée par l'actionneur. Il est même possible d'arriver à une impossibilité technique de réalisation.

Pour réduire l'entrefer nécessaire, on pourrait imaginer interrompre la paroi au niveau de l'entrefer et sceller la paroi sur le corps fixe. Cependant l'étanchéité serait très difficile à obtenir. On pourrait également réduire l'épaisseur de la paroi au niveau de l'entrefer, par exemple par une rainure dans laquelle pénétrerait l'un des corps, par exemple le corps fixe. Cependant la résistance mécanique de l'enceinte serait réduite et elle n'assurerait plus sa fonction.

La présente invention vise à remédier aux inconvénients de la technique antérieure, en fournissant un actionneur magnétique équipé d'une paroi dans son entrefer, dont la configuration présente un entrefer peu ou pas augmenté par rapport à un actionneur sans paroi, conservant donc sensiblement les mêmes performances, tout en assurant une étanchéité et une tenue mécanique équivalentes à celle obtenue avec un actionneur avec une paroi dans un entrefer élargi.

A cette fin, l'invention propose un actionneur magnétique comprenant une partie fixe et une partie mobile, lesdites parties étant ferromagnétiques et formant entre elles un entrefer s'étendant parallèlement à une première direction prédéterminée, et une paroi amagnétique interposée dans l'entrefer, caractérisé en ce que l'une des parties fixe et mobile comprend des doigts pénétrant dans la paroi amagnétique, dirigés vers l'autre des parties fixe et mobile.

Une telle structure d'actionneur magnétique présente l'avantage d'avoir un comportement électromagnétique sensiblement équivalent à une structure sans paroi, et présentant un entrefer de dimension égale à l'espace entre les doigts et l'autre des parties fixe et mobile, les autres éléments étant analogues.

Cet actionneur magnétique présente également l'avantage d'offrir une paroi dont l'étanchéité et la tenue mécanique sont équivalentes à celles d'une paroi de même dimension, mais sans doigts pénétrant dans cette paroi.

Les caractéristiques et avantages de l'invention s'adaptent particulièrement à un palier magnétique.

Selon une caractéristique préférée, les doigts sont cylindriques.

Avantageusement, deux doigts adjacents ont des axes longitudinaux respectifs espacés d'une distance moyenne comprise entre douze dixièmes de la largeur des doigts et trois fois la largeur des doigts. L'espace entre deux doigts adjacents est occupé par la paroi.

Selon une autre caractéristique, les doigts s'étendent sur 90 à 98% de l'épaisseur de la paroi. L'étanchéité et la tenue mécanique sont alors plus facilement assurées.

Avantageusement, les doigts sont fixes par rapport à la partie fixe.

Cependant, on peut prévoir que les doigts sont montés coulissant dans des logements respectifs ménagés dans la partie fixe. Des moyens pour pousser les doigts vers la paroi peuvent en outre être prévus. Cette variante s'adapte à des dilatations des différentes pièces constituant l'actionneur magnétique.

Les caractéristiques et avantages de la présente invention apparaîtront plus clairement à la lecture de plusieurs réalisations illustrées par les dessins ci-joints, dans lesquels :
- la figure 1 est une première réalisation de palier magnétique selon l'invention, en coupe axiale schématique dans un plan contenant un axe de référence Z-Z,
- la figure 2 est une vue en coupe radiale selon la ligne ll-ll représentée à la figure 1, du palier magnétique de la figure 1, avec dimensionnements relatifs différents pour permettre une bonne lisibilité,
- la figure 2a est une vue d'une variante de réalisation,
- la figure 3 est une vue en coupe radiale selon la ligne ll-ll représentée à la figure 1, de l'enceinte de confinement équipant le palier magnétique de la figure 1,
- la figure 4 est une vue partielle en perspective, avec des éléments supprimés, du palier magnétique de la figure 1,
- la figure 5 est une vue partielle en coupe axiale d'une deuxième réalisation de palier magnétique selon l'invention,
- la figure 6 est une vue en coupe transversale d'une troisième réalisation de palier magnétique selon l'invention, et
- la figure 7 est une vue de dessus d'une quatrième réalisation de palier magnétique selon l'invention.

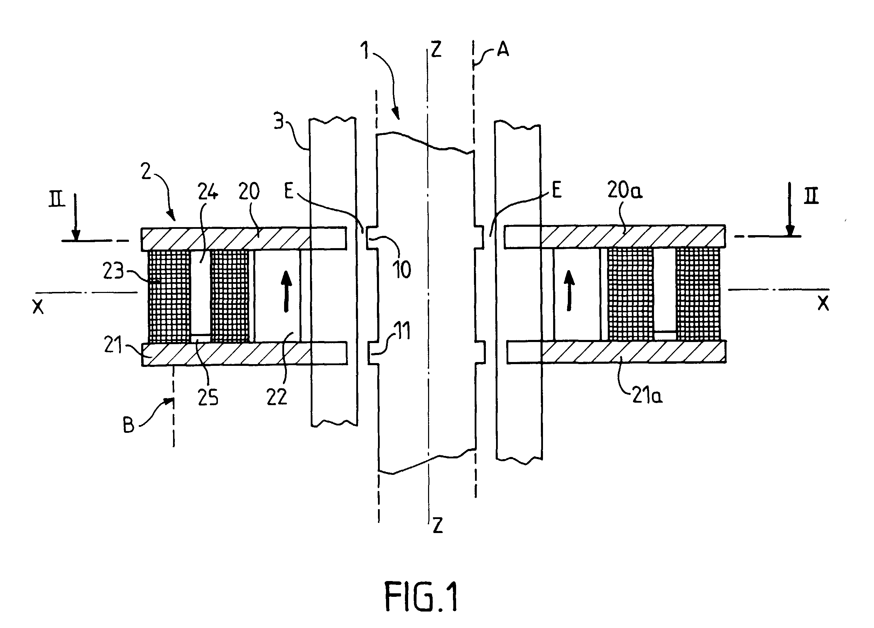

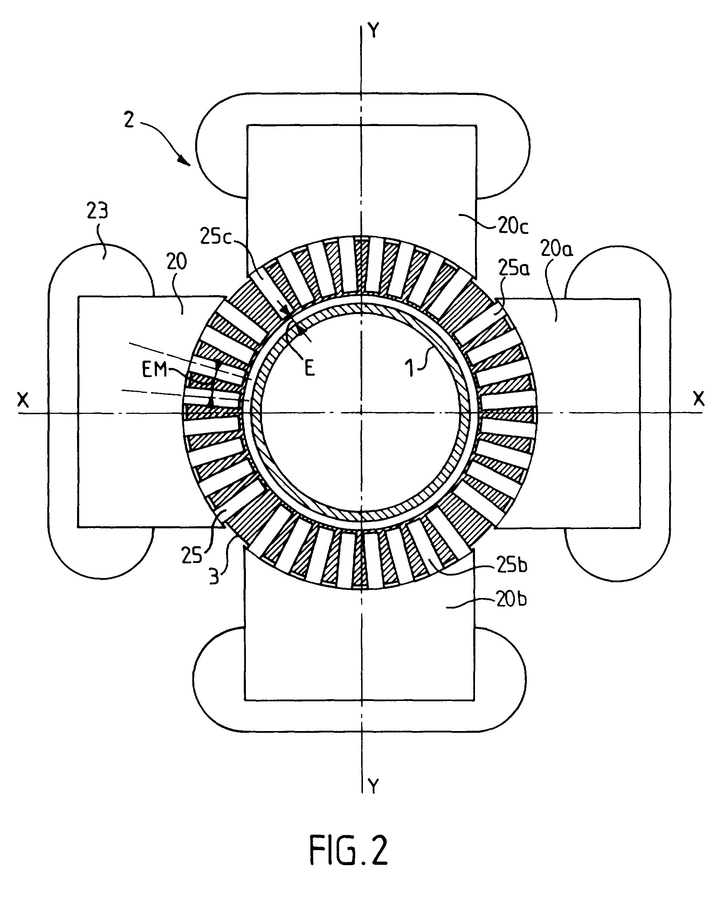

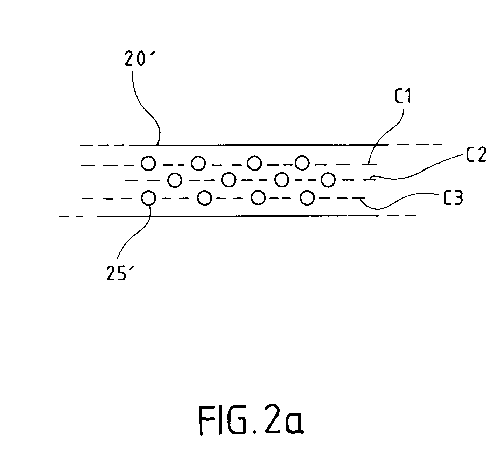

En référence aux figures 1 et 2, l'invention s'applique à un palier magnétique comprenant une partie rotorique 1, une partie statorique 2 et la paroi 3 d'une enceinte de confinement. Les parties rotorique 1 et statorique 2 forment entre elles un entrefer E dans lequel est situé la paroi d'enceinte 3. Ces parties 1 et 2 sont solidaires d'un rotor A et d'un rotor B, respectivement.

Le rotor A est un arbre cylindrique d'axe longitudinal Z-Z. Au moins dans la partie en vis à vis de la partie statorique 2, la partie rotorique 1 est réalisée en un matériau ferromagnétique et constitue ainsi une pièce polaire qui est avantageusement pourvue de deux collerettes 10 et 11.

Le palier comporte deux axes radiaux de centrage X-X et Y-Y perpendiculaires à l'axe de rotation Z-Z du rotor 1. Pour chaque axe de centrage, la partie statorique 2 comprend une paire d'ensembles magnétiques disposés symétriquement de part et d'autre de l'axe de rotation Z-Z.

Le stator 2 comprend un premier ensemble, dit demi-palier, incluant deux premières plaques ferromagnétiques parallèles 20 et 21. Les plaques 20 et 21 sont des pièces polaires perpendiculaires à l'axe Z-Z et sont en regard des collerettes 10 et 11 respectivement. Un aimant permanent 22 à aimantation axiale est inséré entre les plaques 20 et 21. Une bobine 23 est également située entre les plaques 20 et 21. La bobine 23 est enroulée autour d'un noyau 24.

L'aimant permanent 22 génère un flux magnétique passant partiellement dans les pièces polaires 20 et 21, l'entrefer E et le rotor 1. Lorsqu'un courant passe dans la bobine 23, un flux d'induction est généré qui s'additionne ou s'oppose au flux magnétique dû à l'aimant 22. Le reste du flux de l'aimant passe par le noyau 24 et est maintenu à une fraction appropriée du flux total de l'aimant 22 par une cale amagnétique 25 formant entrefer statique.

Les trois autres ensembles sont identiques. Une première paire comprend les pièces polaires 20 et 21 précédemment décrites, et des pièces polaires identiques 20a et 21a décalées de 180 degrés autour de l'axe Z-Z. Les paires 20, 21 et 20a, 21a sont alignées sur l'axe de centrage X-X perpendiculaire à l'axe Z-Z. Une seconde paire d'ensembles est alignée sur l'axe de centrage Y-Y perpendiculaire aux deux axes précédents, et comprend des pièces polaires dont seules les pièces supérieures 20b et 20c sont visibles à la figure 2.

En d'autres termes, les ensembles sont régulièrement répartis autour du stator de sorte que des flux d'induction générés dans les bobines des ensembles assurent un positionnement radial actif du rotor A par rapport au stator B.

Le positionnement longitudinal du rotor par rapport au stator est passif et est assuré par les collerettes 10 et 11 en vis à vis des extrémités, ou tranches, des pièces polaires. On peut bien-sûr supprimer ces collerettes si l'on n'est pas intéressé par ce centrage longitudinal.

La paroi d'enceinte 3 est cylindrique et centrée sur l'axe Z-Z. L'enceinte 3 est en un matériau amagnétique, tel que de l'acier inoxydable, de l'aluminium, une matière plastique ou composite. L'enceinte 3 entoure le rotor 1 au moins dans la région en vis à vis du stator 2, tout en étant sans contact avec le rotor 1. La paroi d'enceinte 3 est liée à la partie statorique 2 d'une manière qui sera détaillée dans la suite. La paroi d'enceinte 3 a pour fonction d'isoler le rotor du milieu environnant et permet ainsi d'imposer une ambiance «extrême» autour du rotor, telle que haute température, haute pression, ou vide primaire, ultravide, ambiances corrosive, toxique ou radioactive. La matière et l'épaisseur de la paroi d'enceinte 3 sont adaptées à l'application envisagée.

Dans tous les cas, la paroi d'enceinte 3 est interposée dans l'entrefer E entre les parties statorique et rotorique.

En référence plus particulièrement à la figure 2, la pièce polaire 20 comprend des doigts radiaux avantageusement identiques 25, ici au nombre de huit. Les doigts 25 sont de préférence cylindriques, mais peuvent en variante avoir une forme tronconique ou une section ovoïde. Les doigts 25 sont régulièrement répartis sur la tranche de la pièce polaire 20 en regard de la collerette 10.

Deux doigts adjacents ont des axes longitudinaux convergents dont l'écartement moyen EM est de préférence compris entre douze dixièmes de la largeur des doigts et trois fois la largeur des doigts.

Les pièces polaires 20a, 20b et 20c comprennent respectivement des doigts 25a, 25b et 25c en pratique identiques aux doigts 25.

De même les pièces polaires 21, 21a, 21b et 21c, non représentées à la figure 2, comprennent des doigts identiques aux doigts 25.

L'entrefer E présente ainsi une largeur effective égale à la distance radiale entre les extrémités des doigts et le rotor, ici les tranches des collerettes 10 et 11. Les flux magnétiques sont guidés dans les doigts. Des essais ont montré que le comportement électromagnétique de ce palier magnétique est sensiblement équivalent à celui d'un palier classique, sans paroi et à pièces polaires statoriques continues, et présentant un entrefer de même dimension que l'entrefer E.

La figure 2a représente une variante de réalisation des doigts, selon laquelle la pièce polaire 20' comporte des doigts 25' plus nombreux et plus petits que les doigts 25 de la pièce polaire 20.

La tranche de la pièce polaire 20' comporte plusieurs séries, ici trois, de doigts 25'.

Les séries de doigts sont disposées selon trois cercles parallèles C1, C2 et C3. Plusieurs doigts voisins 25' jouent un rôle équivalent à celui d'un doigt 25 tel que précédemment décrit, mais la résistance mécanique de la paroi d'enceinte associée à ces doigts 25', et comportant des trous correspondant, peut dans certaines applications spécifiques être supérieure à celle de la paroi qui va être décrite dans la suite.

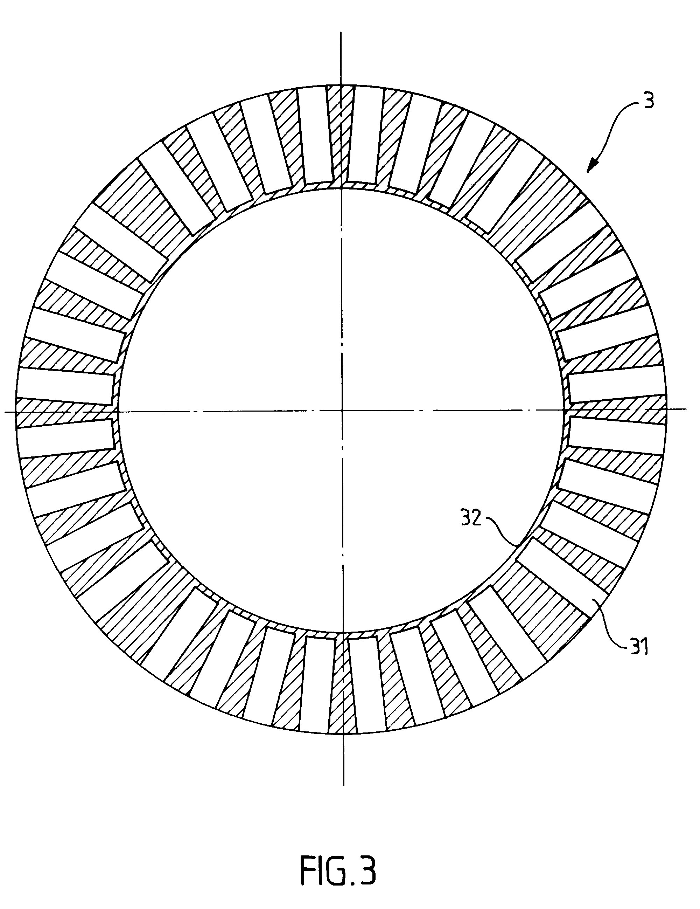

En référence à la figure 3, la paroi d'enceinte 3 a selon une réalisation particulière un diamètre extérieur de 80 mm et un diamètre intérieur de 55 mm. Des trous radiaux 31 sont ménagés sur quatre régions équiréparties du pourtour. Les trous radiaux 31 sont destinés à recevoir les doigts 25, 25a, 25b et 25c précédemment décrits. Les positions relatives et les dimensions des trous 31 sont ainsi adaptées à celles des doigts. Les doigts s'étendent sur environ 90 à 98% de l'épaisseur de la paroi.

Ainsi, à la figure 3, chacun des trous 31 est cylindrique, a un diamètre de 7 mm et une longueur de 22 mm environ, de sorte qu'une paroi résiduelle 32 ayant une épaisseur d'environ 1 mm est ménagée entre le fond du trou 31 et la surface intérieure de l'enceinte 3. L'augmentation de l'entrefer due à la présence de l'enceinte est ainsi limitée à l'épaisseur de la paroi résiduelle 32, qui est petite par rapport à l'épaisseur de la paroi. En conséquence, l'augmentation de dimensionnement du palier magnétique due à la paroi est alors limitée.

Pour assembler les pièces polaires 20 et 21, les doigts 25 et la paroi d'enceinte 3, les doigts 25, qui sont initialement désolidarisés des pièces polaires, sont tout d'abord insérés dans les trous 31 de la paroi 3, puis la tranche des pièces polaires 20 et 21 est appliquée contre la tranche des doigts 25 se trouvant à l'extérieur des trous 31.

Les pièces polaires 20 et 21, et les doigts 25 sont solidarisés par pression lors du montage de la partie statorique, ou par collage.

La paroi d'enceinte 3 comprend une seconde série, décalée axialement vis à vis de la première série, de trous radiaux, non représentés à la figure 3, destinés à recevoir les doigts des pièces polaires 21, 21a, 21b et 21c.

Des résultats expérimentaux ont montré que la résistance mécanique de la paroi 3 est équivalente à celle d'une paroi de même dimension, sans trou.

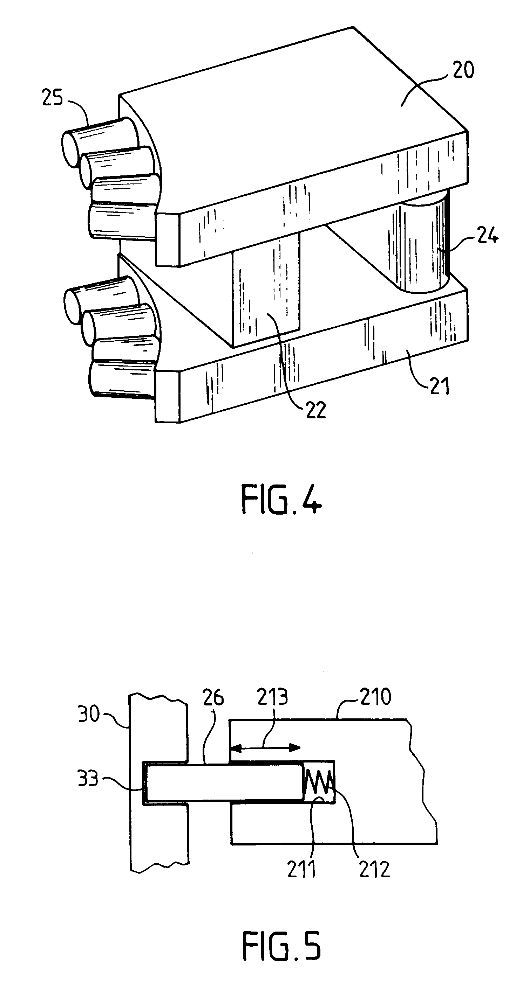

En référence à la figure 4, on reconnaît une portion statorique d'ensemble magnétique comprenant les pièces polaires 20 et 21, l'aimant 22 et le noyau 24, la bobine 23 ayant été omise dans cette figure. Les pièces polaires comprennent les doigts 25 qui sont réalisés en un matériau magnétique tel que du fer pur par exemple. Comme déjà précisé, les doigts 25 sont cylindriques, bien que selon des variantes de réalisation, d'autres formes puissent être adoptées : à titre d'exemple, une section carrée ou rectangulaire, allongée ou aplaties, ou un profil tronconique.

La **figure 5** représente une deuxième réalisation, selon laquelle des doigts 26 sont mobiles par rapport à une pièce polaire 210. Seules les éléments modifiés par rapport à la première réalisation sont représentés à la figure 5. Un trou 211 est ménagé dans la pièce polaire 210 pour chaque doigt 26. Le trou 211 a un diamètre légèrement supérieur à celui du doigt 26 de sorte que le doigt peut coulisser dans le trou 211. Le doigt 26 est inséré dans un trou 33 d'une paroi d'enceinte 30. Le doigt 26 est fixe ou coulissant dans le trou 33. De préférence, un ressort 212 situé au fond du trou 211 pousse le doigt 26 contre l'enceinte 30. Le ressort peut être remplacé par un tampon en matière élastique, telle qu'élastomère, ou encore supprimé. Le coulissement du doigt 26 par rapport à la pièce polaire 210 est dans tous les cas d'amplitude réduite par rapport à la longueur du doigt. De même, la portion longitudinale de contact 213 entre le doigt 26 et la paroi interne du trou 211 demeure sensiblement supérieure à la section transversale du doigt, afin que le flux magnétique s'écoule sans retenue. Cette variante de réalisation permet au palier magnétique de s'adapter à des dilatations dues à l'échauffement des pièces ou à des variations importantes de pression. Ainsi, lorsque l'enceinte de confinement est destinée à être soumise à de fortes contraintes, les entrefers parasites introduits par les jeux nécessaires pour supporter ces contraintes sont limités.

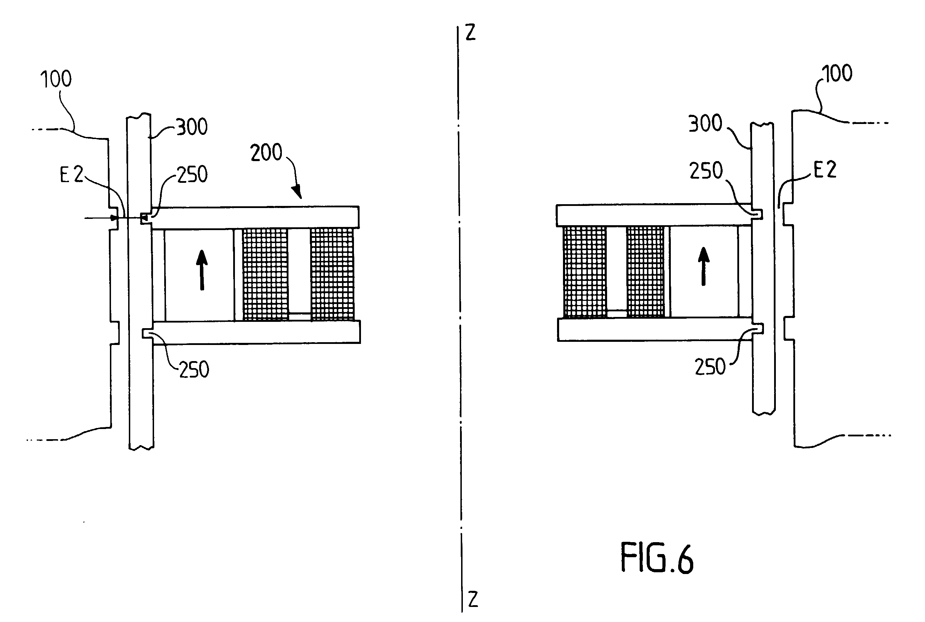

En référence à la figure 6, une troisième réalisation de palier magnétique selon l'invention comprend une partie mobile 100, une partie centrale fixe 200 et une paroi d'enceinte de confinement 300. Les parties mobile et fixe sont ferromagnétiques et l'enceinte de confinement est amagnétique. Cette quatrième réalisation se différencie des précédentes en ce que la partie mobile est à l'extérieur des pièces polaires.

La partie mobile 100 est un cylindre creux d'axe Z-Z à l'intérieur duquel se trouve la partie fixe 200. La partie fixe 200 comprend des paires d'ensembles constitués chacun par des pièces polaires sous la forme de plaques ferromagnétiques, un aimant et une bobine. Les parties fixe et mobile sont séparées par un entrefer cylindrique E2.

La paroi d'enceinte 300 est un cylindre interposé entre la partie mobile et la partie fixe, dans l'entrefer E2. Les tranches des pièces polaires comprennent des doigts radiaux 250 qui pénètrent dans des trous correspondants dans l'enceinte 300. Les doigts 250 sont analogues à ceux précédemment décrits. En particulier, les doigts 250 sont cylindriques.

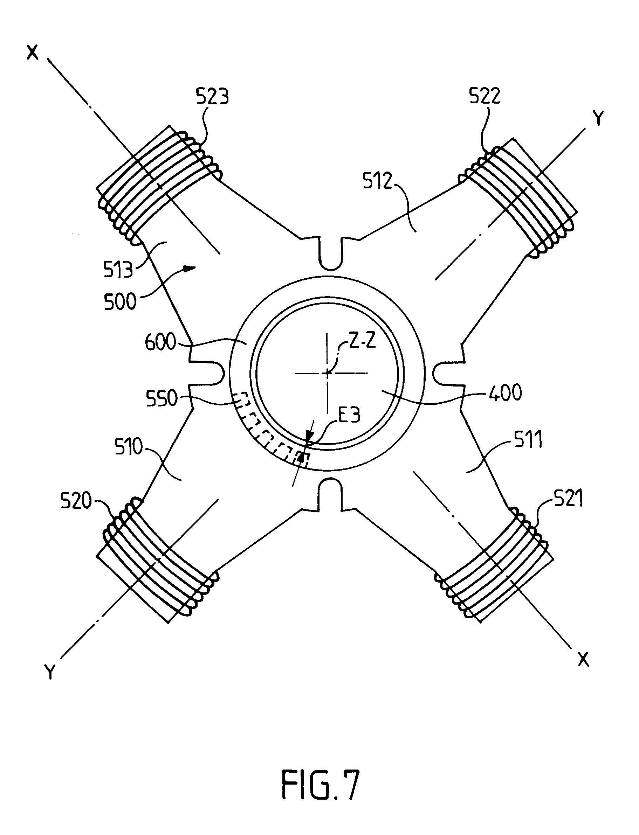

En référence à la figure 7, une quatrième réalisation de l'invention est un palier magnétique sans aimant. Ce palier comprend une partie rotorique 400 cylindrique d'axe Z-Z, une partie statorique 500 et une paroi d'enceinte 600.

Le palier comporte deux axes radiaux de centrage X-X et Y-Y perpendiculaires à l'axe de rotation Z-Z de la partie rotorique 400. Pour chaque axe de centrage, la partie statorique 500 comprend une paire de pièces polaires disposées symétriquement de part et d'autre de l'axe de rotation Z-Z. Seules les pièces polaires supérieures 510, 511, 512 et 513 sont visibles à la figure 8, les pièces inférieures étant situées exactement en dessous. Les pièces polaires inférieure et supérieure de chaque paire sont reliées par une pièce polaire ferromagnétique axiale non représentée disposée à distance du rotor. Un bobinage 520, 521, 522 et 523 connecté à un dispositif d'alimentation fournit du flux à chacune des pièces polaires de manière à positionner radialement la partie rotorique.

Les parties rotorique et statorique forment entre elles un entrefer cylindrique E3. La paroi d'enceinte 600 est cylindrique et interposée dans l'entrefer E3. Les pièces polaires inférieures et supérieures de la partie statorique comprennent des doigts radiaux 550 pénétrant dans des trous de l'enceinte 600. Les doigts 550 sont identiques à ceux décrits en référence à la première réalisation.

## Revendications

1. Actionneur magnétique comprenant une partie fixe (2, 5, 200, 500, 8) et une partie mobile (1, 4, 100, 400, 7), lesdites parties étant ferromagnétiques et formant entre elles un entrefer (E, EN, E2, E3, E5) s'étendant parallèlement à une première direction prédéterminée, et une paroi amagnétique (3, 30, 6, 300, 600, 9) interposée dans l'entrefer,
caractérisé en ce que l'une des parties fixe et mobile comprend des doigts (25, 26, 57, 250, 550, 89) pénétrant dans la paroi amagnétique, dirigés vers l'autre des parties fixe et mobile.

2. Actionneur magnétique selon la revendication 1, caractérisé en ce que les doigts (25, 26, 250, 550, 89) sont cylindriques.

3. Actionneur magnétique selon l'une quelconque des revendications 1 à 2, caractérisé en ce que les doigts s'étendent sur 90 à 98% de l'épaisseur de la paroi.

4. Actionneur magnétique selon l'une quelconque des revendications 1 à 3, caractérisé en ce que les doigts (25) sont fixes par rapport à la partie fixe.

5. Actionneur magnétique selon l'une quelconque des revendications 1 à 3, caractérisé en ce que les doigts (26) sont montés coulissant dans des logements respectifs (211) ménagés dans la partie fixe.

6. Actionneur magnétique selon la revendication 5, caractérisé en ce qu'il comprend des moyens (212) pour pousser les doigts (26) vers la paroi (30).

7. Actionneur magnétique selon l'une quelconque des revendications 1 à 6, caractérisé en ce que la partie mobile (1) est, au moins dans la région de l'entrefer, sensiblement cylindrique autour d'un axe de référence (Z-Z), en ce que la partie fixe (2) comprend des paires d'ensembles comprenant chacun des doigts radiaux (25), chaque ensemble étant propre à créer un flux magnétique passant au moins partiellement dans les doigts, l'entrefer et la partie mobile, et en ce que la paroi (3) est cylindrique au moins dans la région de l'entrefer.

8. Actionneur magnétique selon l'une quelconque des revendications 1 à 7, caractérisé en ce qu'il consiste en un palier magnétique magnétiquement actif selon ladite première direction.
